# EUROPÄISCHE PATENTSCHRIFT

(11) **EP 1 899 106 B1**
(45) Veröffentlichungstag und Bekanntmachung des Hinweises auf die Patenterteilung: **07.01.2009**
(21) Anmeldenummer: 06742862.3
(22) Anmeldetag: 10.05.2006
(51) Int. Cl.: B23Q 1/52, F16C 29/06

(54) **DREHLAGEREINRICHTUNG, INSBESONDERE FÜR EINEN DREHBAREN RUNDTISCH EINER WERKZEUGMASCHINE**
PIVOT BEARING DEVICE, PARTICULARLY FOR A ROTATING CIRCULAR TABLE OF A MACHINE TOOL
SYSTEME DE PALIER ROTATIF NOTAMMENT DESTINE A UN PLATEAU CIRCULAIRE D'UNE MACHINE-OUTIL

(30) Priorität: 25.05.2005 DE 102005024004
(43) Veröffentlichungstag der Anmeldung: 19.03.2008
(73) Patentinhaber: Schaeffler KG, 91074 Herzogenaurach (DE)
(72) Erfinder: NEGELE, Richard, 73733 Esslingen (DE); DITTENHÖFER, Thomas, 97519 Riedbach (DE); SCHREIBER, Martin, 91074 Herzogenaurach (DE)
(86) Internationale Anmeldenummer: PCT/EP2006/004382
(87) Internationale Veröffentlichungsnummer: WO 2006/125524

(56) Entgegenhaltungen:
- DE-A1- 3 615 871
- DE-C1- 10 204 965
- PATENT ABSTRACTS OF JAPAN Bd. 009, Nr. 235 (M-415), 21. September 1985 (1985-09-21) & JP 60 091016 A (TOSHIBA KK), 22. Mai 1985 (1985-05-22)
- PATENT ABSTRACTS OF JAPAN Bd. 007, Nr. 090 (P-191), 14. April 1983 (1983-04-14) & JP 58 017532 A (CANON KK), 1. Februar 1983 (1983-02-01)
- PATENT ABSTRACTS OF JAPAN Bd. 009, Nr. 149 (M-390), 25. Juni 1985 (1985-06-25) & JP 60 026815 A (SHIMAZU SEISAKUSHO KK), 9. Februar 1985 (1985-02-09)
- PATENT ABSTRACTS OF JAPAN Bd. 010, Nr. 105 (M-471), 19. April 1986 (1986-04-19) & JP 60 237218 A (TOSHIBA KK), 26. November 1985 (1985-11-26)
- PATENT ABSTRACTS OF JAPAN Bd. 013, Nr. 002 (E-700), 6. Januar 1989 (1989-01-06) & JP 63 213460 A (YOKOGAWA ELECTRIC CORP), 6. September 1988 (1988-09-06)

## Beschreibung

### Gebiet der Erfindung

Die Erfindung betrifft eine Drehlagereinrichtung gemäß Anspruch 1.

Drehlagereinrichtungen dienen üblicherweise dazu, ein erstes Element drehbar gegenüber einem feststehenden zweiten Element zu lagern. Zu nennen ist als Ausführungsbeispiel eine Werkzeugmaschine mit einem drehbaren Rundtisch, der beispielsweise getaktet bewegt wird, und der über die Drehlagereinrichtung gegenüber dem Maschinengestell oder dergleichen drehbar aufgenommen ist. Bekannte Drehlagereinrichtungen umfassen ein erstes Einrichtungsteil, das mit dem drehbar zu lagernden Element, also beispielsweise dem Rundtisch, gekoppelt ist, und ein zweites feststehendes Einrichtungsteil, das beispielsweise mit dem Maschinengestell oder dergleichen verbunden ist. Die beiden Einrichtungsteile sind über wenigstens ein Wälzlager drehbar miteinander verbunden.

Bei einer üblichen horizontalen Anordnung der Drehlagereinrichtung wirkt auf das wenigstens eine Wälzlager eine Axialkraft, die im Wesentlichen aus dem Gewicht des ersten Einrichtungsteils, aus dem ebenfalls konstant wirkenden Eigengewicht des gekoppelten Elements, also beispielsweise des Tisches, sowie einem variablen Gewichtsanteil eines beispielsweise zu bearbeitenden Werkstücks und den beispielsweise auf dem Rundtisch angeordneten Spannmitteln zur Befestigung des Werkstücks etc. resultiert. Weiterhin wirken beispielsweise aus der Bearbeitung des Werkstücks oder dergleichen sowie aus etwaigen Unwuchten auch Radialkräfte auf das wenigstens eine Wälzlager ein, wie auch etwaige aus Unwucht- und Bearbeitungskräften resultierende Kippmomente.

Für die Lagerlebensdauer entscheidend sind in erster Linie die statisch wirkenden Axialkräfte. Um etwaige hieraus resultierende Schwierigkeiten zu umgehen, wird das verwendete Wälzlager entsprechend dimensioniert. Dies ist kostenintensiv, mitunter ergeben sich auch konstruktionstechnische Schwierigkeiten, ferner ist die Maximaldrehzahl begrenzt.

Aus der JP 60091016A ist eine Drehlagereinrichtung bekannt, umfassend ein erstes Einrichtungsteil, das mit einem drehbar zu lagernden Element, zu verbinden ist, und ein zweites feststehendes Einrichtungsteil, welche Einrichtungsteile über wenigstens ein Wälzlager verbunden sind, auf welches eine Axialkraft wirkt, wobei eine zwischen dem ersten und dem zweiten Einrichtungsteil wirkende Magneteinrichtung zur Erzeugung einer der Axialkraft im Wesentlichen entgegengesetzten gerichteten Kompensationskraft vorgesehen ist, und wobei ein die Magneteinrichtung Permanentmagnetelemente umfasst, die am ersten und am zweiten Einrichtungsteil einander gegenüberliegend angeordnet sind.

### Zusammenfassung der Erfindung

Der Erfindung liegt damit das Problem zugrunde, eine Drehlagereinrichtung anzugeben, bei dem die aus der auf das wenigstens eine Wälzlager wirkenden Axialkraft resultierenden Probleme zumindest teilweise kompensiert werden können.

Zur Lösung dieses Problems ist bei einer Drehlagereinrichtung der eingangs genannten Art erfindungsgemäß vorgesehen, dass eine zwischen dem ersten und dem zweiten Einrichtungsteil wirkenden Magneteinrichtung zur Erzeugung einer der Axialkraft im Wesentlichen entgegengesetzten gerichteten Kompensationskraft vorgesehen ist.

Die erfindungsgemäße Drehlagereinrichtung zeichnet sich durch den Einsatz einer Magneteinrichtung aus, über die eine Kompensationskraft erzeugt werden kann, die, nachdem die Magneteinrichtung zwischen den beiden Einrichtungsteilen angeordnet ist bzw. zwischen diesen wirkt, zwangsläufig auf das wenigstens eine Wälzlager einwirkt, und die der Axialkraft entgegengesetzt gerichtet ist. Über die Magneteinrichtung wirkt zwischen beiden Einrichtungsteilen eine permanente Anziehungskraft, die der eigengewichtsbedingten Axialkraft, dies kompensieren, entgegengesetzt gerichtet ist. Die resultierende, auf das wenigstens eine Wälzlager tatsächlich einwirkende Kraft kann damit zu einem großen Teil, je nach Auslegung der Magneteinrichtung, kompensiert werden. Damit ist es möglich, auch relativ kleine Wälzlager bei gleichzeitig ausreichend langer Lebensdauer einzusetzen, die auch mit hohen Dauerdrehzahlen arbeiten können. Auf hydrostatische Lager oder dergleichen kann vorteilhaft verzichtet werden.

Die Magneteinrichtung selbst umfasst zweckmäßigerweise mehrere Permanentmagnetelemente, die am ersten oder am zweiten Einrichtungsteil angeordnet sind und mit dem gegenüberliegenden anderen Einrichtungsteil zusammenwirken. Das jeweils gegenüberliegende Einrichtungsteil ist selbstverständlich metallisch, so dass sich die Permanentmagnetelemente und das gegenüberliegende Einrichtungsteil zwangsläufig anziehen.

Alternativ zur Anordnung der Permanentmagnetelemente an nur einem Einrichtungsteil ist es selbstverständlich auch denkbar, die mehreren Permanentmagnetelemente am ersten und am zweiten Einrichtungsteil einander gegenüberliegend anzuordnen, wobei die Permanentmagnetelemente mit ihren Polen natürlich entsprechend auszurichten sind, so dass sie einander anziehen.

Nach der Erfindung, ist vorgesehen, dass das die Permanentmagnete aufweisende erste Einrichtungsteil zugleich den Rotor eines das erste Einrichtungsteil antreibenden Motors und das zweite Einrichtungsteil den Stator des Motors bildet oder umfasst. Der Motor kann dabei zweckmäßigerweise als scheibenförmiger Torquemotor ausgebildet sein. Bei dieser Ausführungsform ist der Motor also einrichtungsseitig integriert und bildet einen Teil der Drehlagereinrichtung. Ein solcher Torquemotor lässt zweckmäßigerweise einen Direktantrieb zu. Die Permanentmagnete sind bei dem hier als Scheibenläufer ausgeführten Torquemotor am scheibenförmigen Rotor, der vom ersten Einrichtungsteil gebildet ist bzw. Teil desselben ist, angeordnet, axial darüber liegend, beabstandet befindet sich das dem Stator bildende oder umfassende zweite Einrichtungsteil, das selbstverständlich über sämtliche elektrotechnische bzw. elektromagnetischen Komponenten verfügt, die zur Bildung eines Torquemotors erforderlich sind. Diese Ausgestaltung ist besonders vorteilhaft, als durch die Ausbildung des Torquemotors als horizontal angeordneter Scheibenläufer sowohl ein integrierter Direktantrieb als auch die erfindungsgemäße magnetische Lastkompensation erreicht wird.

Als Wälzlager kommt zweckmäßigerweise ein kombiniertes Radial-Axiallager, insbesondere in Form eines Zylinderrollenlagers, zum Einsatz. Alternativ können auch zwei- oder mehrreihige Schrägkugellager vorgesehen sein.

Neben der Drehlagereinrichtung betrifft die Erfindung ferner eine Werkzeugmaschine umfassend einen drehbaren Rundtisch, der über eine Drehlagereinrichtung nach einer der beschriebenen Ausführungsformen verfügt.

### Kurze Beschreibung der Zeichnungen

Weitere Vorteile, Merkmale und Einzelheiten der Erfindung ergeben sich aus der nachfolgenden Beschreibung eines Ausführungsbeispiels. Dabei zeigen:
- Fig. 1: eine Schnittansicht einer Prinzipdarstellung einer erfindungsgemäßen Drehlagereinrichtung mit aufgesetztem Rundtisch, und
- Fig. 2: eine vergrößerte Detailansicht der Drehlagereinrichtung aus Fig. 1.

### Detaillierte Beschreibung der Zeichnungen

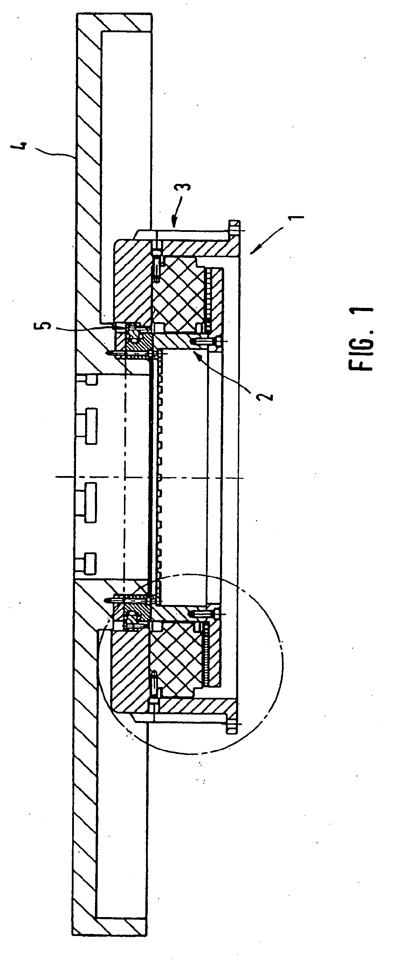

Fig. 1 zeigt eine erfindungsgemäße Drehlagereinrichtung 1, bestehend aus einem ersten, im montierten Zustand drehbaren Einrichtungsteil 2 und einem zweiten, in der verbauten Situation feststehenden Einrichtungsteil 3. Im gezeigten Ausführungsbeispiel nach Fig. 1 ist am ersten Einrichtungsteil ein Rundtisch 4, auf den beispielsweise verschiedene Spanneinrichtungen zum Halten eines Werkstücks oder dergleichen aufgesetzt werden können, angeordnet. Das erste Einrichtungsteil 2 und das zweite Einrichtungsteil 3 sind über eine kombinierte zweiteilige Wälzlagerung 5 miteinander drehverbunden, wobei die Wälzlagerung 5 aus einem Radiallager 6 sowie zwei Axiallagern 7 besteht. Es handelt sich also um ein kombiniertes Radial-Axialzylinderrollenlager.

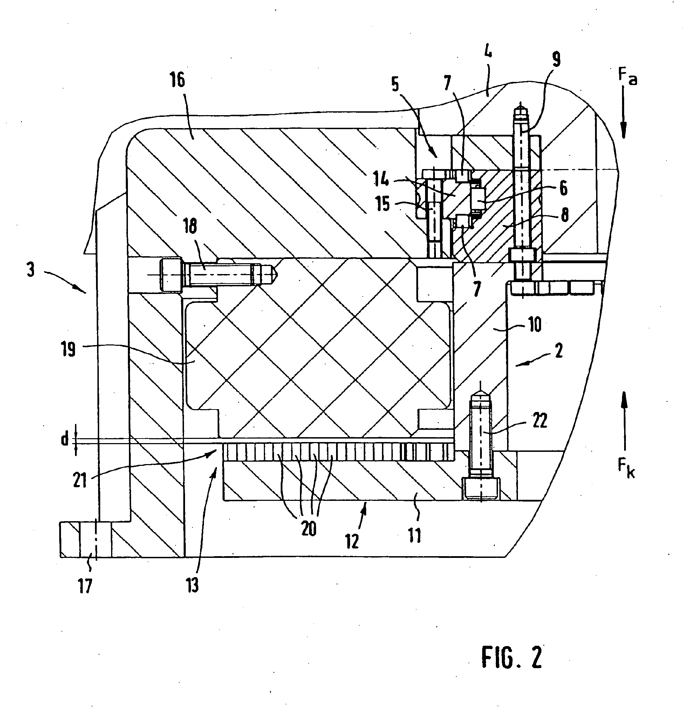

Wie Fig. 2 weiterhin zeigt, sind an dem inneren ringförmigen Lagerteil 8 über Schraubenverbindungen 9 zum einen der Rundlagertisch 4 befestigt, zum anderen ist über ein Zwischenstück 10 eine Motorscheibe 11, die am Zwischenstück 10 über Schraubenverbindungen 22 befestigt ist, angeordnet. Das Zwischenstück 10 sowie die Motorscheibe 11 bilden also Teil des ersten Einrichtungsteils. Die Motorscheibe 11 bildet den Rotor 12 eines hier als Scheibenläufer ausgeführten Torquemotors 13, auf den nachfolgend noch näher eingegangen wird.

An einem zweiten Lagerteil 14 ist über Schraubenverbindungen 15 das Lagergehäuse 16 angeordnet, das über durch entsprechende Befestigungsbohrungen 17 geführte Befestigungsmittel beispielsweise mit dem Maschinengestell drehfest verbunden wird. Über weitere Schraubenverbindungen 18 ist mit dem Lagergehäuse 16 ferner ein Stator 19 verbunden, der zusammen mit dem Rotor 12 den Torquemotor 13 bildet. Das Lagergehäuse 16 sowie der Stator 19 sind Teil des zweiten, feststehenden Einrichtungsteils.

An der den Rotor 12 bildenden Motorscheibe 11 sind an der zum Stator 19 gerichteten Seite eine Vielzahl von Permanentmagneten 20 bevorzugt über die gesamte Scheibenebene verteilt angeordnet. Im Stator selbst sind, nicht näher dargestellt, die zur Vervollständigung des Torquemotors 13 erforderlichen elektromagnetischen Komponenten wie Erregerspulen etc. angeordnet, worauf nicht näher eingegangen werden braucht. Grundsätzlich handelt es sich bei einem Torquemotor um einen hochpoligen, permanent erregten Synchronmotor, wobei am Rotor bekanntermaßen die Permanentmagneten angeordnet sind, während am Stator die einzelnen gewickelten Spulen mit hoher Packungsdichte angeordnet sind, worüber hohe magnetische Kräfte beim Bestromen der Spulen erzeugt werden können. Üblicherweise sind die einzelnen Spulen bzw. die Wicklungsköpfe zwischen den Statorblechen angeordnet. Nachdem bei einem solchen Torquemotor quasi keine Reibung eintritt, sind solche Motoren weitgehend wartungsfrei. Der grundsätzliche Aufbau eines Torquemotors ist dem Fachmann hinlänglich bekannt, so dass hierauf nicht näher eingegangen werden braucht. Die zentralen Elemente sind auch bei dem hier als Scheibenläufer konzipierten Torquemotor zwingend vorzusehen.

Auf das Wälzlager 5 wirkt stets eine axial gerichtete, statische Axialkraft Fₐ, die zum einen aus dem Eigengewicht des ersten Einrichtungsteils 2 resultiert, hier also dem Lagerteil 8, dem Zwischenstück 10 sowie der Motorscheibe 11 und den zusätzlichen Befestigungselementen bzw. sonstigen Bauteilen, die das erste Einrichtungsteil 2 bilden. Hinzu kommt noch die aus dem Eigengewicht des Rundtischs 4 resultierende Kraftkomponente, zuzüglich etwaiger auf dem Tisch angeordneter Spannelemente sowie dem zu bearbeitenden Werkstück etc.

Diese Axialkraft Fₐ kann über eine entgegengesetzt gerichtete Kompensationskraft zu einem gewissen Teil oder weitgehend kompensiert werden. Diese Kompensationskraft Fₖ wird über die zwischen dem ersten und dem zweiten Einrichtungsteil 2, 3 vorgesehene Magneteinrichtung 21, hier gebildet durch die Permanentmagneten 20 in Verbindung mit dem Stator 19, zwischen denen von Haus aus eine Magnetkopplung wirkt, erzeugt. Zwischen den Permanentmagneten 20 und dem Stator 19 wirken permanent Anziehungskräfte in der Weise, dass der Rotor 12 über das Verbindungsstück 10 eine der Axialkraft Fₐ entgegengesetzt gerichtete Kompensationskraft Fₖ erzeugt. Diese Kompensationskraft Fₖ wird auch bei Betrieb des Torquemotors 13 erzeugt, nachdem sich auch dabei die Permanentmagneten 20 und der Stator 19, die über den Luftspalt d voneinander getrennt sind, stets anziehen. Die erzeugte Kompensationskraft hängt davon ab, wie stark die Anziehungskraft der Magneteinrichtung 21 ist, was letztlich über die mittels der Permanentmagneten 20 erzeugbare magnetische Feldstärke eingestellt werden kann.

Bei der in den Figuren 1 und 2 beschriebenen Ausführungsform ist wie beschrieben ein integrierter Torquemotor 13 vorgesehen. Das heißt, dass kein zusätzliches Antriebselement vorgesehen werden muss. Dem Torquemotor kommt eine Doppelfunktion zu, nämlich zum einen der Drehantrieb des Rundtischs 13, zum anderen die Funktion der Lastkompensation, also die Funktion zur Erzeugung der Kompensationskraft Fₖ,

Die Ausgestaltung kann aber alternativ dazu auch derart sein, dass anstelle eines integrierten Torquemotors das erste Einrichtungsteil 2 mit einem separaten Antrieb, beispielsweise einem herkömmlichen Elektromotor mit Schneckengetriebe, gekoppelt wird. Dieser Antrieb wird beispielsweise an die Motorscheibe 11 angeflanscht. Auf der Motorscheibe 11 befinden sich in diesem Fall, wie dies in Fig. 2 gezeigt ist, die über die Scheibenebene verteilten Permanentmagneten 20. Nachdem der Drehantrieb also extern zur Dreheinrichtung ist, muss kein Stator mehr vorgesehen sein. Das heißt, dass anstelle des in Fig. 2 gezeigten Stators 19 ein einfaches Metallelement, eben ein entsprechend dimensionierter Metallring, integriert werden kann, der mit den Permanentmagneten 20 zusammenwirkt. Auch ist es natürlich denkbar, eine geeignete Blechpaketanordnung zur Erzeugung der Magnetkräfte bzw. zum Zusammenwirken mit den Permanentmagneten 20 einzusetzen, wobei die Anordnung so gewählt wird, dass bei einer Tischrotation Wirbelströme, die rotationsbedingt induziert werden könnten, weitgehend vermieden werden. Auch bei dieser Ausführungsform würden sich also die beiden ersten und zweiten Einrichtungsteile 2, 3 anziehen, so dass es zur Erzeugung der Kompensationskraft Fₖ auch bei Verwendung eines externen Antriebs kommen würde. Dabei besteht natürlich die Möglichkeit, nicht nur an der Motorscheibe 11 entsprechende Permanentmagnetelemente 20 anzuordnen, sondern auch am gegenüberliegenden Teil des zweiten Einrichtungsteils, so dass die Magnetkopplung verstärkt werden kann.

### Bezugszahlenliste

- 1: Drehlagereinrichtung
- 2: drehbares Einrichtungsteil
- 3: feststehendes Einrichtungsteil
- 4: Rundtisch
- 5: Wälzlager
- 6: Radiallager
- 7: Axiallager
- 8: Lagerteil
- 9: Schraubenverbindungen
- 10: Zwischenstück
- 11: Motorscheibe
- 12: Schraubenverbindungen
- 13: Torquemotor
- 14: Lagerteil
- 15: Schraubenverbindungen
- 16: Lagergehäuse
- 17: Befestigungsbohrungen
- 18: Schraubenverbindungen
- 19: Stator
- 20: Permanentmagnete
- 21: Magneteinrichtung
- 22: Schraubenverbindungen

- Fₐ: Axialkraft
- Fₖ: Kompensationskraft
- d: Luftspalt

## Patentansprüche

1. Drehlagereinrichtung für einen drehbaren Rundtisch einer Werkzeugmaschine, umfassend ein erstes Einrichtungsteil, das mit einem drehbar zu lagernden Element, dem Rundtisch, zu verbinden ist, und ein zweites feststehendes Einrichtungsteil, welche Einrichtungsteile über wenigstens ein Wälzlager verbunden sind, auf welches eine Axialkraft wirkt, wobei eine zwischen dem ersten und dem zweiten Einrichtungsteil (2, 3) wirkende Magneteinrichtung (21) zur Erzeugung einer der Axialkraft (Fₐ) im Wesentlichen entgegengesetzten gerichteten Kompensationskraft (Fₖ) vorgesehen ist, und wobei die Magneteinrichtung (21) mehrere Permanentmagnetelemente (20) umfasst, die am ersten Einrichtungsteil (2) angeordnet sind und mit dem gegenüberliegenden anderen Einrichtungsteil (3) zusammenwirken, oder die Magneteinrichtung (21) mehrere Permanentmagnetelemente (20) umfasst, die am ersten und am zweiten Einrichtungsteil (2, 3) einander gegenüberliegend angeordnet sind, und wobei das die Permanentmagnetelemente (20) aufweisende erste Einrichtungsteil (2) zugleich den Rotor (12) eines das erste Einrichtungsteil (2) antreibenden Motors (13) und das zweite Einrichtungsteil (3) den Stator (19) des Motors (13) bildet oder umfasst.

2. Drehlagereinrichtung nach Anspruch 1, **dadurch gekennzeichnet, dass** der Motor (13) ein scheibenförmiger Torquemotor ist.

3. Drehlagereinrichtung nach einem der vorangehenden Ansprüche, **dadurch gekennzeichnet, dass** als Wälzlager (5) ein kombiniertes Radial-Axiallager (6, 7), insbesondere in Form eines Zylinderrollenlagers, oder zwei- oder mehrreihige Schrägkugellager vorgesehen sind.

4. Werkzeugmaschine umfassend einen drehbaren Rundtisch, der über eine Drehlagereinrichtung (1) nach einem der Ansprüche 1 bis 3 gelagert ist.

## Claims

1. Pivot bearing device for a rotating circular table of a machine tool, comprising a first device part which is to be connected to an element to be rotatably mounted, the circular table, and a second fixed device part, which device parts are connected via at least one rolling-contact bearing, on which an axial force acts, wherein a magnet device (21) which acts between the first and the second device part (2, 3) is provided for generating a compensation force (Fₖ) directed essentially in opposition to the axial force (Fₐ), and wherein the magnet device (21) comprises a plurality of permanent magnet elements (20) which are arranged on the first device part (2) and interact with the opposite other device part (3), or the magnet device (21) comprises a plurality of permanent magnet elements (20) which are arranged opposite one another on the first and on the second device part (2, 3), and wherein the first device part (2) having the permanent magnet elements (20) at the same time forms or comprises the rotor (12) of a motor (13) driving the first device part (2), and the second device part (3) at the same time forms or comprises the stator (19) of the motor (13).

2. Pivot bearing device according to Claim 1, **characterized in that** the motor (13) is a disc-shaped torque motor.

3. Pivot bearing device according to either of the preceding claims, **characterized in that** a combined radial/axial bearing (6, 7), in particular in the form of a cylindrical roller bearing, or double- or multirow angular contact ball bearings are provided as rolling-contact bearing (5).

4. Machine tool comprising a rotating circular table which is mounted via a pivot bearing device (1) according to one of Claims 1 to 3.

## Revendications

1. Système de palier rotatif pour un plateau circulaire rotatif d'une machine-outil, comprenant une première partie de système qui doit être connectée à un élément, le plateau circulaire, à monter à rotation, et une deuxième partie de système fixe, les parties de système étant connectées par le biais d'au moins un palier à roulement qui est soumis à une force axiale, un système d'aimant (21) agissant entre la première et la deuxième partie de système (2, 3) étant prévu pour produire une force de compensation (Fₖ) orientée sensiblement en un sens opposé à la force axiale (Fₐ), le système d'aimant (21) comprenant plusieurs éléments d'aimants permanents (20) qui sont disposés sur la première partie de système (2) et qui coopèrent avec l'autre partie de système opposée (3), ou le système d'aimant (21) comprenant plusieurs éléments d'aimants permanents (20) qui sont disposés sur la première et la deuxième partie de système (2, 3) en face les uns des autres, la première partie de système (2) présentant les éléments d'aimants permanents (20) formant ou comprenant en même temps le rotor (12) d'un moteur (13) entraînant la première partie de système (2), et la deuxième partie de système (3) formant ou comprenant le stator (19) du moteur (13).

2. Système de palier rotatif selon la revendication 1, **caractérisé en ce que** le moteur (13) est un moteur-couple en forme de disque.

3. Système de palier rotatif selon l'une quelconque des revendications précédentes, **caractérisé en ce que** l'on prévoit comme palier à roulement (5) un palier radial-axial combiné (6, 7), en particulier en forme de palier à rouleaux cylindriques ou des roulements à billes à contact oblique à deux rangées ou plus.

4. Machine-outil comprenant un plateau circulaire rotatif qui est monté par le biais d'un système de palier rotatif (1) selon l'une quelconque des revendications 1 à 3.
